# EUROPEAN PATENT APPLICATION

(11) **EP 4 787 562 A1**
(43) Date of publication of application: **05.08.2026**
(21) Application number: 24870243.3
(22) Date of filing: 23.08.2024
(51) Int. Cl.: H01M 50/15, H01M 50/169, H01M 50/317, H01M 50/593, H01M 50/586

(54) **END COVER ASSEMBLY, BATTERY, BATTERY PACK, AND ELECTRICAL SYSTEM**

(30) Priority: 25.09.2023 CN 202322613569 U
(71) Applicant: BYD Company Limited, Shenzhen, Guangdong 518118 (CN)
(72) Inventor: ZHU, Yan, Shenzhen, Guangdong 518118 (CN); LIU, Xufeng, Shenzhen, Guangdong 518118 (CN); LI, Xingqun, Shenzhen, Guangdong 518118 (CN); CHEN, Jinfu, Shenzhen, Guangdong 518118 (CN); LI, Bingyao, Shenzhen, Guangdong 518118 (CN)
(74) Representative: Mathys & Squire
(86) International application number: PCT/CN2024/114166
(87) International publication number: WO 2025/066697

(57) **Abstract**

An end cover assembly (10), a battery (100), a battery pack (200), and an electrical system (300). The end cover assembly (10) comprises a cover plate (11), an explosion-proof valve (12), and an insulating plate assembly (13). The cover plate (11) comprises a first surface (111) and a second surface (112) facing away from each other in the thickness direction thereof, and the cover plate (11) is provided with an explosion-proof hole (113) extending through the first surface (111) and the second surface (112). The explosion-proof valve (12) is connected to the cover plate (11) and seals the explosion-proof hole (113). The insulating plate assembly (13) comprises a third surface (131) and a fourth surface (132) facing away from each other in the thickness direction of the insulating plate assembly (13), the third surface (131) being close to the second surface (112), the third surface (131) being provided with an air hole (134) penetrating to the fourth surface (132) of the insulating plate assembly (13), and the air hole (134) being disposed opposite the explosion-proof valve (12). The insulating plate assembly (13) comprises a first insulating plate (13A) and a second insulating plate (13B), oppositely arranged along a length direction of the cover plate (11), an orthographic projection area of the explosion-proof valve (12) onto the first insulating plate (13A) taking up 40% to 100% of the area of an orthographic projection of the explosion-proof valve (12) along the thickness direction of the cover plate (11).

## Description

### CROSS-REFERENCE TO RELATED APPLICATIONS

The present disclosure claims priority to Chinese Patent Application No.202322613569.2 filed on September 25, 2023 and titled "END COVER ASSEMBLY, BATTERY, BATTERY PACK, AND ELECTRICAL SYSTEM", which is incorporated herein by reference in its entirety.

### FIELD

The present disclosure relates to the field of energy storage device technology, and in particular, to an end cover assembly, a battery, a battery pack, and an electrical system.

### BACKGROUND

With the development of technology, the utilization of batteries has become increasingly widespread. Currently, common battery components mainly include a housing, a battery cell assembly, and an end cover assembly. The battery cell assembly is accommodated within the housing, the end cover assembly seals the housing, the tabs of the battery cell assembly are connected to terminal posts on the end cover assembly. To ensure battery safety, an explosion-proof valve is generally installed on the end cover assembly, the explosion-proof valve may burst and release pressure when the internal pressure of the battery increases due to gas generation.

However, the response speed of the explosion-proof valve of the existing end cover assembly is relatively slow. When gas is rapidly generated inside the battery, the response speed of the explosion-proof valve determines the safety performance of the battery. Therefore, how to solve the problem of slow response speed of the explosion-proof valve has become a key issue.

### SUMMARY

The present disclosure provides an end cover assembly, a battery, a battery pack, and an electrical system, aiming to resolve the problem of slow response speed of the explosion-proof valve.

To resolve the above technical problem, the following technical solutions are provided in the present disclosure.

As a first aspect, the present disclosure provides an end cover assembly. The end cover assembly includes a cover plate, an explosion-proof valve, and an insulating plate assembly; the cover plate includes a first surface and a second surface facing away from each other in a thickness direction of the cover plate, and the cover plate is arranged with an explosion-proof hole penetrating the first surface and the second surface; the explosion-proof valve is connected to the cover plate and seals the explosion-proof hole; the insulating plate assembly includes a third surface and a fourth surface facing away from each other in the thickness direction of the insulating plate assembly, the third surface is close to the second surface, the third surface is arranged with an air hole penetrating to the fourth surface of the insulating plate assembly, and the air hole is disposed opposite to the explosion-proof valve; the insulating plate assembly includes a first insulating plate and a second insulating plate, oppositely spaced apart along a length direction of the cover plate, and an orthographic projection area of the explosion-proof valve onto the first insulating plate takes up 40% to 100% of the orthographic projection area of the explosion-proof valve along the thickness direction of the cover plate.

In some embodiments, the orthographic projection area of the explosion-proof valve onto the first insulating plate takes up 50% to 60% of the orthographic projection area of the explosion-proof valve along the thickness direction of the cover plate.

In some embodiments, in the length direction of the cover plate, the shortest distances from two opposite ends of the cover plate along the length direction to a center of the explosion-proof hole are the same, and a length of the first insulating plate is different from a length of the second insulating plate.

In some embodiments, the insulating plate assembly is arranged with a gap between the first insulating plate and the second insulating plate.

In some embodiments, a gap is arranged between the first insulating plate and the second insulating plate, and in the length direction of the cover plate, the length L1 of the first insulating plate, the length L3 of the second insulating plate, and a width L2 of the gap satisfy a relational expression: L1 ≥ L2 + L3.

In some embodiments, the orthographic projection area of the explosion-proof valve onto the first insulating plate is greater than or equal to the difference between the orthographic projection area of the explosion-proof valve along the thickness direction of the cover plate and the orthographic projection area of the explosion-proof valve onto the first insulating plate.

In some embodiments, the insulating plate assembly is arranged with an accommodating groove on the third surface, the accommodating groove is disposed opposite to the explosion-proof valve, and the accommodating groove and the insulating plate assembly satisfy a relational expression: 0.4 ≤ c/h ≤ 0.8, in a width direction of the cover plate, c is a width of the accommodating groove, h is a width of the insulating plate assembly, and the units of c and h are the same.

In some embodiments, one side facing the cover plate (11) of the first insulating plate is arranged with a concave first accommodating groove, one side facing the cover plate of the second insulating plate is arranged with a concave second accommodating groove, and the first accommodating groove and the second accommodating groove form the accommodating groove.

In some embodiments, the accommodating groove satisfies at least one of the following: a groove depth H1 of the first accommodating groove being in the range of 0.5mm to 2mm; or a groove depth H2 of the second accommodating groove being in the range of 0.5mm to 2mm.

In some embodiments, the first accommodating groove extends along the length direction of the cover plate to one side of the first insulating plate facing the second insulating plate to form a first notch, and the second accommodating groove extends along the length direction of the cover plate to one side of the second insulating plate facing the first insulating plate to form a second notch.

In some embodiments, the air hole includes at least one of the following: a first air hole arranged on the first insulating plate, the first air hole extending through the first insulating plate along the thickness direction of the cover plate; or a second air hole arranged on the second insulating plate, the second air hole extending through the second insulating plate along the thickness direction of the cover plate.

In some embodiments, the insulating plate assembly is arranged with a plurality of air holes, the air holes include the first air holes and the second air holes, the number of the first air holes arranged on the first insulating plate is the same as the number of the second air holes arranged on the second insulating plate, and the first air holes are arranged in an array and the second air holes are arranged in an array.

As a second aspect, the present disclosure also provides a battery. The battery includes a battery cell assembly, a housing, and the end cover assembly according to any one of the embodiments of the first aspect. The battery cell assembly is accommodated within the housing, the end cover assembly is connected to the housing, and the end cover assembly is electrically connected to the battery cell assembly.

As a third aspect, the present disclosure also provides a battery pack. The battery pack includes the battery according to the second aspect.

As a fourth aspect, the present disclosure also provides an electrical system. The electrical system includes the battery pack according to the third aspect or the battery according to the second aspect.

In the present disclosure, by arranging air holes on the insulating plate assembly, when the internal pressure of the battery increases, gas may flow to the vicinity of the explosion-proof valve through the air holes, thereby bursting the explosion-proof valve; at the same time, the advantage of designing the combination of the explosion-proof valve and the accommodating groove that meet specific dimensions is that when the explosion-proof valve bursts to release pressure, the combustion residues ejected out of the battery housing may be reduced; by setting the proportion of the orthographic projection area of the explosion-proof valve onto the first insulating plate within the above range, the explosion-proof valve may form an eccentric distribution on the first insulating plate or the second insulating plate, that is, the facing area between the explosion-proof valve and the first insulating plate or the second insulating plate is relatively large, to ensure when the first insulating plate and the second insulating plate are compressed inside the battery, one of the insulating plates may have a larger contact area with the explosion-proof valve, which is more conducive to the rapid opening of the explosion-proof valve.

### BRIEF DESCRIPTION OF THE DRAWINGS

To more clearly illustrate the embodiments of the present disclosure or the technical solutions in the prior art, the following will briefly introduce the drawings needed in the description of the embodiments or the prior art. Obviously, the drawings in the following description are only some embodiments of the present disclosure, for those of ordinary skill in the art, other drawings can be obtained according to these drawings without creative work.
FIG. 1 is an exploded structural schematic diagram of a battery according to some embodiments of the present disclosure.
FIG. 2 is an exploded structural schematic diagram of an end cover assembly according to some embodiments of the present disclosure.
FIG. 3 is a top view of an insulating plate assembly according to some embodiments of the present disclosure.
FIG. 4 is a cross-sectional schematic diagram of an insulating plate assembly along the A-A direction in FIG. 3.
FIG. 5 is a top view of an insulating plate assembly accommodating an explosion-proof valve according to some embodiments of the present disclosure.
FIG. 6 is a top view of the insulating plate assembly accommodating an explosion-proof valve according to other embodiments of the present disclosure.
FIG. 7 is a structural schematic diagram of a battery pack according to some embodiments of the present disclosure.
FIG. 8A is a structural schematic diagram of an electrical system according to some embodiments of the present disclosure.
FIG. 8B is a structural schematic diagram of an electrical system according to other embodiments of the present disclosure.

### Description of reference numbers:

100 - battery, 10 - end cover assembly, 20 - battery cell assembly, 30 - housing, 21 - battery cell, 22 - tab, 22A- positive tab, 22B - negative tab, 11 - cover plate, 111 - first surface, 112 - second surface, 113 - explosion-proof hole, 114A - first terminal post hole, 114B - second terminal post hole, 115 - first liquid injection hole, 12 - explosion-proof valve, 13 - insulating plate assembly, 131 - third surface, 132 - fourth surface, 133 - accommodating groove, 134 - air hole, 134A - first air hole, 134B - second air hole, 135 - gap, 136 - second liquid injection hole, 13A- first insulating plate, 131A - third left surface, 132A - fourth left surface, 13A1 - first opposite end, 13A2 - first connecting end, 13A3 - third terminal post hole, 13A4 - first accommodating groove, 13A5 - first notch, 13B - second insulating plate, 131B - third right surface, 132B - fourth right surface, 13B1 - second opposite end, 13B2 - second connecting end, 13B3 - fourth terminal post hole, 13B4 - second accommodating groove, 13B5 - second notch, 14 - terminal post, 14A - first terminal post, 14B - second terminal post, 200 - battery pack, 300 - electrical system, X - length direction, Y- width direction, Z - thickness direction.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. Based on the embodiments in the present disclosure, all other embodiments obtained by those of ordinary skill in the art without making creative efforts shall fall within the protection scope of the present disclosure.

It will be noted that when a component is referred to as being "fixed to" another component, it may be directly arranged on the other component or there may be an intermediate component. When a component is considered to be "connected" to another component, it may be directly connected to the other component or there may be an intermediate component at the same time.

Unless otherwise defined, all technical and scientific terms used in the present disclosure have the same meaning as commonly understood by those skilled in the technical field of the present disclosure. The terms used in the specification of the present disclosure are only for describing specific embodiments and are not intended to limit the present disclosure. The term "and/or" used in the present disclosure includes any combination or all combinations of one or more related listed items. The term "A/B" used in the present disclosure represents the ratio of parameter A to parameter B.

Some embodiments of the present disclosure will be described in detail below with reference to the accompanying drawings. In the case of no conflict, the following embodiments and features in the embodiments can be combined with each other.

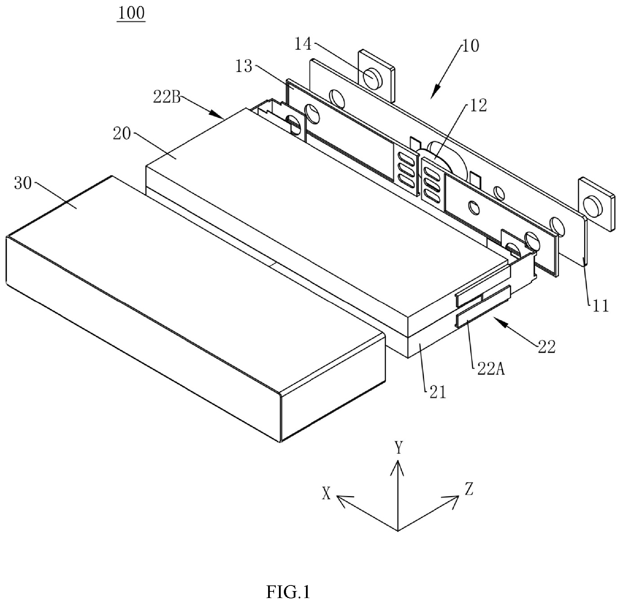

The present disclosure provides a battery 100. Referring to FIG.1, the battery 100 comprises a housing 30, a battery cell assembly 20, and an end cover assembly 10. The cell assembly 20 is accommodated within the housing 30. The end cover assembly 10 is connected to the housing 30, the end cover assembly 10 seals an opening of the housing 30, and the end cover assembly 10 is electrically connected to the battery cell assembly 20.

Exemplarily, an external shape of the battery 100 may be rectangular. In the present disclosure, a length direction of the battery 100 is defined as the X direction of the spatial coordinate system, a width direction of the battery 100 is defined as the Y direction of the spatial coordinate system, and a height direction (i.e., thickness direction) of the battery 100 is defined as the Z direction of the spatial coordinate system. For ease of understanding, to illustrate the above directions, the direction in which the battery cell assembly 20 is placed into the housing 30 through the opening is considered as the height direction of the battery 100, the long side of the opening is considered as the length direction, and the short side of the opening is considered as the width direction.

Referring to FIG.1, the battery cell assembly 20 comprises a battery cell 21 and a tab 22. The cell 21 may be cuboid-shaped, and the battery cell assembly 20 may include two battery cells 21. The two cells 21 are stacked along the width direction (Y direction) and accommodated within the housing 30. The tab 22 includes a positive tab 22A and a negative tab 22B. Each battery cell 21 is arranged with the positive tab 22A and the negative tab 22B at opposite ends in the length direction (X direction).

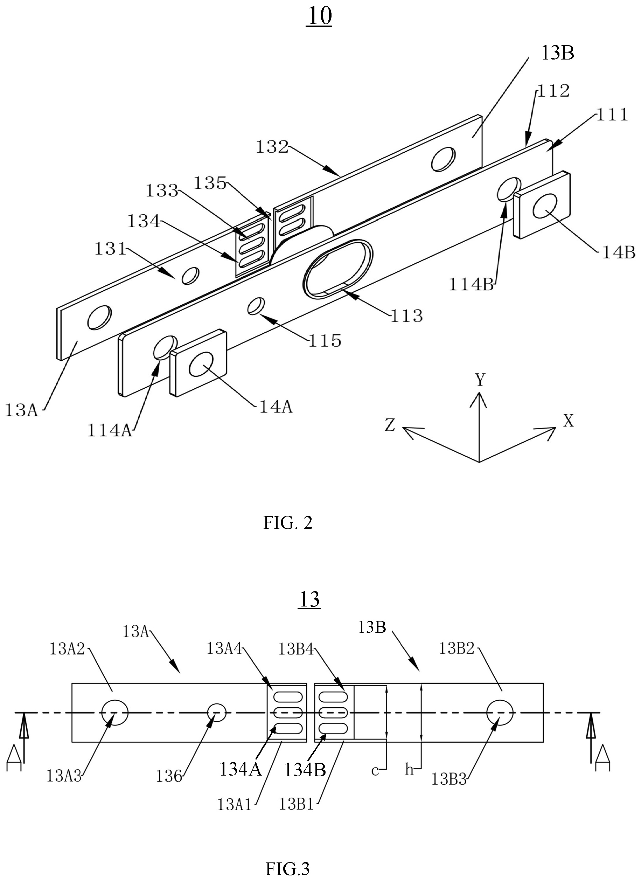

In some embodiments, referring to FIG. 1 and 2, the end cover assembly 10 includes a cover plate 11, an explosion-proof valve 12, an insulating plate assembly 13, and a terminal post 14.

The cover plate 11 may have a flat plate structure, a length direction of the cover plate 11 is consistent with the length direction of the battery 100, a width direction of the cover plate 11 is consistent with the width direction of the battery 100, and a thickness direction of the cover plate 11 is consistent with the height direction of the battery 100. It will be noted that the length direction, width direction, and thickness direction involved below all refer to the cover plate 11.

Referring to FIG.2, the cover plate 11 includes a first surface 111 and a second surface 112 facing away from each other in the thickness direction (Z direction) of the cover plate 11, the first surface 111 faces the exterior of the end cover assembly 10, while the second surface 112 faces the cell assembly 20. The cover plate 11 is arranged with an explosion-proof hole 113, a terminal post hole, and a first liquid injection hole 115 extending through the first surface 111 and the second surface 112.

In one embodiment of the present disclosure, the explosion-proof hole 113 is located in the middle of the cover plate 11, and the shape of the explosion-proof hole 113 may be elliptical. In the length direction (X direction) of the cover plate 11, the shortest distances from two opposite ends of the cover plate 11 to a center of the explosion-proof hole are the same.

Referring to FIG.2, the cover plate 11 is arranged with two terminal post holes, namely a first terminal post hole 114A and a second terminal post hole 114B. The first terminal post hole 114A and the second terminal post hole 114B are located at opposite ends of the cover plate 11, respectively. The shape of the injection hole is circular. In some embodiments of the present disclosure, the first terminal post hole 114A may be a positive terminal post hole, and the second terminal post hole 114B may be a negative terminal post hole; in some embodiments of the present disclosure, the first terminal post hole 114A may be a negative terminal post hole, and the second terminal post hole 114B may be a positive terminal post hole.

Referring to FIG.2, the shape of the first liquid injection hole 115 may be circular. In some embodiments of the present disclosure, the first liquid injection hole 115 may be located between the first terminal post hole 114A and the explosion-proof hole 113; in some embodiments of the present disclosure, the first liquid injection hole 115 may be located between the second terminal post hole 114B and the explosion-proof hole 113. It will be understood that the first liquid injection hole 115 needs to be located between the positive terminal post hole and the explosion-proof hole 113.

The explosion-proof valve 12 is connected to the cover plate 11 and seals the explosion-proof hole 113. In some embodiments of the present disclosure, the explosion-proof valve 12 is connected to the second surface 112, and the connection method between the explosion-proof valve 12 and the second surface 112 includes, but is not limited to adhesive bonding, welding, or clamping. The explosion-proof valve 12 may also be disposed in the explosion-proof hole 113; specifically, the outer circumference of the explosion-proof valve 12 is connected to the inner wall of the explosion-proof hole 113.

In some embodiments of the present disclosure, indentations may be formed on the explosion-proof valve 12. The thickness of the explosion-proof valve 12 at the indentations may be smaller than that at the positions without indentations. The provision of indentations may make the explosion-proof valve 12 easier to burst, and the present disclosure does not specifically limit the shape and size of the indentations.

In some embodiments of the present disclosure, referring to FIG.2, the insulating plate assembly 13 includes a third surface 131 and a fourth surface 132 facing away from each other in the thickness direction (Z direction) of the insulating plate assembly 13, the third surface 131 is connected to the second surface 112, an orthogonal projection of the explosion-proof valve 12 onto the insulating plate assembly 13 is located within the insulating plate assembly 13, and the insulating plate assembly 13 is arranged with an air hole 134 extending through to the fourth surface 132.

In some embodiments of the present disclosure, the insulating plate assembly 13 may have a flat plate-like structure, and the length and width of the insulating plate assembly 13 may be the same as or slightly smaller than the length and width of the cover plate 11. The insulating plate assembly 13 is located between the battery cell assembly 20 and the cover plate 11, and is used to isolate the cover plate 11 from the battery cell assembly 20. The material of the insulating plate assembly 13 may be an insulating material, such as plastic.

Referring to FIG.2, the insulating plate assembly 13 includes a first insulating plate 13A and a second insulating plate 13B oppositely arranged along the length direction (X direction) of the cover plate. An accommodating groove 133 is disposed opposite to the explosion-proof valve 12, the first insulating plate 13A and the second insulating plate 13B together enclose the accommodating groove 133, and a gap 135 is arranged between the first insulating plate 13A and the second insulating plate 13B. It will be understood that the first insulating plate 13A and the second insulating plate 13B may be two independent insulating plates, so a width of the gap 135 between the first insulating plate 13A and the second insulating plate 13B is the distance between them. A length of the first insulating plate 13A and a length of the second insulating plate 13B may be the same or different.

In some embodiments, the first insulating plate 13A may serve as a positive electrode insulating plate, while the second insulating plate 13B may serve as a negative electrode insulating plate. Of course, in other embodiments, the first insulating plate 13A may serve as a negative electrode insulating plate, and the second insulating plate 13B may serve as a positive electrode insulating plate. It will be understood that the positive electrode insulating plate is used to connect a positive electrode of the battery cell assembly 20, and the negative electrode insulating plate is used to connect a negative electrode of the battery cell assembly 20. The present disclosure does not impose specific limitations on the first insulating plate 13A and the second insulating plate 13B.

In some embodiments of the present disclosure, the third surface 131 is arranged with an air hole 134 extending through to the fourth surface 132 of the insulating plate assembly 13, and the air hole 134 is disposed opposite to the explosion-proof valve 12.

In some embodiments, an orthographic projection area of the explosion-proof valve 12 onto the first insulating plate 13A takes up 40% to 100% of the orthographic projection area of the explosion-proof valve 12 along the thickness direction of the cover plate 11, and the explosion-proof hole 113 is directly disposed opposite to the air hole 134.

Specifically, the explosion-proof valve 12 may be located in a central area of the cover plate 11. It will be understood that since the cover plate 11 is rectangular, the distances from the explosion-proof valve 12 to two ends of a long side of the cover plate 11 are the same, and the distances to two ends of a wide side of the cover plate 11 are also the same, therefore, the explosion-proof valve 12 is located in the central area of the cover plate 11.

The orthographic projection area of the explosion-proof valve 12 along the thickness direction of the cover plate 11 may either be an area enclosed by the indentations on the explosion-proof valve itself, or an area of the explosion-proof hole on the cover plate.

In some embodiments of the present disclosure, the explosion-proof valve 12 is an axisymmetric figure, therefore, when the lengths of the first insulating plate 13A and the second insulating plate 13B are different, the areas of the explosion-proof valve 12 covered by the first insulating plate 13A and the second insulating plate 13B are also different. Consequently, an opposite end of one of the first insulating plate 13A and the second insulating plate 13B may exceed an position of the central axis of the explosion-proof valve 12, while the opposite end of the other one of the first insulating plate 13A and the second insulating plate 13B does not exceed the position of the central axis of the explosion-proof valve 12.

It will be understood that when the length of the first insulating plate 13A is greater than that of the second insulating plate 13B, the area of the explosion-proof valve 12 covered by the first insulating plate 13A is larger; conversely, when the length of the first insulating plate 13A is less than that of the second insulating plate 13B, the area of the explosion-proof valve 12 covered by the first insulating plate 13A is smaller.

In this combined state, when the internal pressure of the battery 100 is released, the two opposite ends (i.e., the end that exceeds the center position of the explosion-proof valve 12 and the end that does not exceed the center position of the explosion-proof valve 12) are simultaneously compressed by the internal air pressure, the end that exceeds the center position of the explosion-proof valve 12 abuts against a larger area of the explosion-proof valve 12 to form an opposite end eccentric to the explosion-proof valve 12, to ensure when the explosion-proof valve 12 is opened, the abutting end can help the explosion-proof valve 12 open quickly; and when the explosion-proof valve 12 is in an open state, the air holes arranged on the opposite end may also help filter internal combustion residues.

In some embodiments of the present disclosure, the orthogonally projected area of the explosion-proof valve 12 onto the first insulating plate 13A takes up 40%, 45%, 50%, 55%, 60%, 65%, or 70% of the orthogonally projected area of the explosion-proof valve 12 along the thickness direction of the cover plate 11. When a proportion of the orthogonally projected area is less than the lower limit of the above range, it indicates that the first insulating plate 13A is shorter, and the second insulating plate 13B is longer, and the gap 135 between them cannot provide sufficient direct air pressure to burst the explosion-proof valve 12. When the proportion of this orthogonally projected area exceeds the upper limit of the above range, it indicates that the second insulating plate 13B is shorter and the first insulating plate 13A is longer, and the gap 135 between them also cannot provide sufficient direct air pressure to burst the explosion-proof valve 12.

In some embodiments of the present disclosure, the orthographic projection area of the explosion-proof valve 12 onto the first insulating plate 13A takes up 50% to 60% of the orthographic projection area of the explosion-proof valve 12 along the thickness direction of the cover plate 11.

By setting the proportion of the orthographic projection area of the explosion-proof valve 12 onto the first insulating plate 13A within the above range, the explosion-proof valve 12 may form an eccentric distribution pattern on the first insulating plate 13A or the second insulating plate 13B. That is, the facing area between the explosion-proof valve 12 and the first insulating plate 13A or the second insulating plate 13B is relatively larger, to ensure when the first insulating plate 13A and the second insulating plate 13B are compressed inside the battery 100, one of the insulating plates may have a larger abutting area with the explosion-proof valve 12, which is more conducive to the rapid opening of the explosion-proof valve 12.

In some embodiments, in the length direction (X direction) of the cover plate 11, the shortest distances from two opposite ends of the cover plate 11 along the X direction to the center of the explosion-proof hole 113 are the same, while the length of the first insulating plate 13A is different from the length of the second insulating plate 13B.

In some embodiments, the insulating plate assembly 13 is arranged with the gap 135 between the first insulating plate 13A and the second insulating plate 13B. The provision of the gap between the first insulating plate 13A and the second insulating plate 13B ensures the normal opening of the explosion-proof valve, while also serving as a filtering effect, preventing residues generated in the battery from blocking the explosion-proof valve.

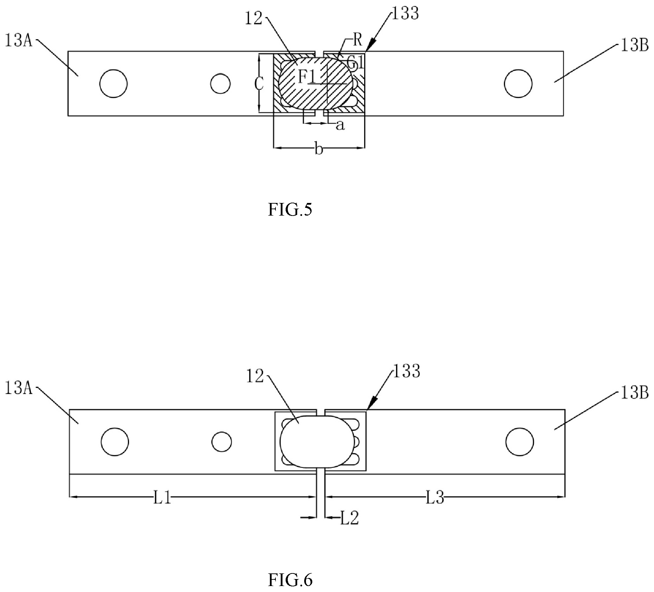

In some embodiments, referring to FIG. 6, in the length direction (X direction) of the cover plate 11, the length L1 of the first insulating plate 13A, the length L3 of the second insulating plate 13B, and a width L2 of the gap 135 satisfy a relationship expression: L1 ≥ L2 + L3.

Specifically, based on the above embodiment, when the orthographic projection area of the explosion-proof valve 12 onto the first insulating plate 13A takes up more than 50% of the total area (i.e., the orthographic projection area of the explosion-proof valve 12 along the thickness direction of the cover plate 11), the length of the first insulating plate 13A is greater than that of the second insulating plate 13B, and the length of the second insulating plate 13B plus the width of the gap 135 is still less than the length of the first insulating plate 13A.

In some embodiments, the orthographic projection area of the explosion-proof valve 12 onto the first insulating plate 13A is greater than or equal to the difference between the orthographic projection area of the explosion-proof valve 12 along the thickness direction of the cover plate 11 and the orthographic projection area of the explosion-proof valve 12 onto the first insulating plate 13A. The difference between the orthographic projection area of the explosion-proof valve 12 along the thickness direction of the cover plate 11 and the orthographic projection area of the explosion-proof valve 12 onto the first insulating plate 13A is equal to the sum of the orthographic projection area of the explosion-proof valve onto the second insulating plate 13B and the orthographic projection area of the explosion-proof valve onto the gap 135. Satisfying the above relationship allows the first insulating plate and the second insulating plate to be eccentrically arranged relative to the explosion-proof valve, thereby improving the opening efficiency of the explosion-proof valve.

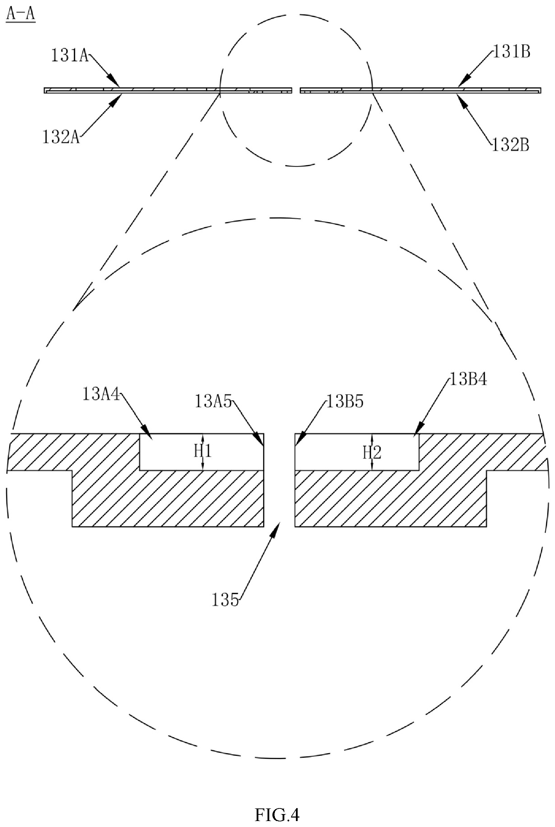

In some embodiments, a thickness of the first insulating plate 13A is the same as a thickness of the second insulating plate 13B. Referring to FIG. 4, it will be understood that the first insulating plate 13A includes a third left surface 131A and a fourth left surface 132A facing away from each other, and the second insulating plate 13B includes a third right surface 131B and a fourth right surface 132B facing away from each other. The third left surface 131A and the third right surface 131B form the third surface 131, and the fourth left surface 132A and the fourth right surface 132B form the fourth surface 132. Both the first insulating plate 13A and the second insulating plate 13B are arranged with the air hole 134.

In some embodiments, referring to FIG. 3, the first insulating plate 13A further includes a first opposite end 13A1 and a first connection end 13A2, and the second insulating plate 13B further includes a second opposite end 13B1 and a second connection end 13B2. The first opposite end 13A1 and the first connection end 13A2 are located at opposite ends of the first insulating plate 13A in the length direction (X direction), and the second opposite end 13B1 and the second connection end 13B2 are located at opposite ends of the second insulating plate 13B in the length direction (X direction). The first opposite end 13A1 is adjacent to the second opposite end 13B1. The first opposite end 13A1 and the second opposite end 13B1 together enclose the accommodating groove 133.

Furthermore, referring to FIG.3, the end of the first insulating plate 13A away from the second insulating plate 13B (the first connection end 13A2) is also arranged with a third terminal post hole 13A3, and the end of the second insulating plate 13B away from the first insulating plate 13A (the second connection end 13B2) is also arranged with a through fourth terminal post hole 13B3. The first insulating plate 13A or the second insulating plate 13B is also arranged with a second liquid injection hole 136. The third terminal post hole 13A3 is directly disposed opposite the first terminal post hole 114A, the fourth terminal post hole 13B3 is directly disposed opposite the second terminal post hole 114B, and the second liquid injection hole 136 is directly disposed opposite the first liquid injection hole 115.

Referring to FIG. 2, the terminal post 14 includes a first terminal post 14A and a second terminal post 14B, the structure of the first terminal post 14A is basically the same as the structure of the second terminal post 14B. The first terminal post 14A extends the cover plate 11 and the first insulating plate 13A, and the second terminal post 14B extends the cover plate 11 and the second insulating plate 13B.

In some embodiments, the first terminal post 14A may be a positive terminal post, while the second terminal post 14B may be a negative terminal post. Of course, in other embodiments, the first terminal post 14A may be a negative terminal post, and the second terminal post 14B may be a positive terminal post.

It will be understood that the first terminal post 14A should pass through the first terminal post hole 114A and the third terminal post hole 13A3, while the second terminal post 14B should pass through the second terminal post hole 114B and the fourth terminal post hole 13B3.

In some embodiments, referring to FIG. 3, the accommodating groove 133 and the insulating plate assembly 13 satisfy the relationship expression: 0.4 ≤ c/h ≤ 0.8, where in the width direction (Y direction) of the cover plate 11, c represents a width of the accommodating groove 133 and h represents a width of the insulating plate assembly 13 , the units of c and h are the same.

Specifically, in the width direction (Y direction) of the cover plate 11, a width of the first accommodating groove 13A4 and a width of the second accommodating groove 13B4 should be the same, and both should be less than the width of the insulating plate assembly 13.

In some embodiments of the present disclosure, the distances from two opposite sides of the accommodating groove 133 in the Y direction to the corresponding nearest insulating plate assembly 13 are the same. That is, it will be understood that the accommodating groove 133 is located in the middle of the insulating plate assembly 13 in the Y direction.

When c/h is less than the lower limit of the above range, it indicates that a slot width of the accommodating groove 133 is smaller, which will cause the explosion-proof valve 12 to easily exceed the accommodating groove 133 and abut against the third surface 131, thereby increasing a thickness of the end cover assembly 10. When c/h is greater than the upper limit of the above range, it indicates that the groove width of the accommodating groove 133 is large, which will result in the insufficient strength of the side wall of the accommodating groove 133 in the Y direction.

Therefore, by designing the combination of the accommodating groove 133 and the insulating plate assembly 13 with dimensions satisfying the above relationship, the slot width of the accommodating groove 133 may be within an appropriate range, which ensures the structural strength of the insulating plate assembly 13 and at the same time ensures that the explosion-proof valve 12 may be accommodated, thereby avoiding the excessive thickness of the end cover assembly 10.

In some embodiments, referring to FIG.3 and 4, one side facing the cover plate 11 of the first insulating plate 13A is arranged with a concave first accommodating groove 13A4, the first accommodating groove 13A4 extends along the length direction (X direction) of the cover plate 11 to one side of the first insulating plate 13A facing the second insulating plate 13B to form a first notch 13A5. One side facing the cover plate 11 of the second insulating plate 13B is arranged with a concave second accommodating groove 13B4, the second accommodating groove 13B4 extends along the length direction (X direction) of the cover plate 11 to one side of the second insulation plate 13B facing the first insulating plate 13A to form a second notch 13B5. The first accommodating groove 13A4 and the second accommodating groove 13B4 form the accommodating groove 133.

Specifically, based on the above embodiment, the accommodating groove 133 may include the first accommodating groove 13A4 and the second accommodating groove 13B4, the first accommodating groove 13A4 is located on the first opposite end 13A1, and the second accommodating groove 13B4 is located on the second opposite end 13B1, the gap 135 is located between the first accommodating groove 13A4 and the second accommodating groove 13B4.

The third left surface 131A is arranged with the concave first accommodating groove 13A4, and the first accommodating groove 13A4 extends along the length direction (X direction) to one side of the first insulating plate 13A facing the second insulating plate 13B to form the first notch 13A5. The third right surface 131B is arranged with the concave second accommodating groove 13B4, and the second accommodating groove 13B4 extends along the length direction (X direction) to one side of the second insulating plate 13B facing the first insulating plate 13A to form the second notch 13B5. Therefore, there is no shielding between the bottom wall of the first accommodating groove 13A4 and the bottom wall of the second accommodating groove 13B4.

By setting the first accommodating groove 13A4 to extend to one side of the first insulating plate 13A to form the first notch 13A5, and setting the second accommodating groove 13B4 to extend to one side of the second insulating plate 13B to form the second notch 13B5, there is no shielding between the bottom wall of the first accommodating groove 13A4 and the bottom wall of the second accommodating groove 13B4. After the explosion-proof valve 12 is accommodated in the accommodating groove 133, a space may be maintained between the explosion-proof valve 12 and the bottom wall of the accommodating groove 133, thereby forming a certain pressure relief space. When the internal gas pressure of the battery 100 increases, the pressure relief space may provide greater gas pressure to burst the explosion-proof valve 12.

In some embodiments, referring to FIG.4, the groove depth H1 of the first accommodating groove 13A4 is in the range of 0.5mm to 2mm; and/or, the groove depth H2 of the second accommodating groove 13B4 is in the range of 0.5mm to 2mm.

Specifically, the groove depth refers to a concave depth of the accommodating groove 133 in the thickness direction (Z direction). The depth of the first accommodating groove 13A4 and the depth of the second accommodating groove 13B4 may be the same or different. In some embodiments, the accommodating groove 133 has a uniform depth. Moreover, the depth of the accommodating groove 133 should be less than the thickness of the insulating plate assembly 13.

In some embodiments, the depth of the first accommodating groove 13A4 and/or the depth of the second accommodating groove 13B4 may be, but not limited to, 0.5mm, 0.7mm, 1mm, 1.2mm, 1.4mm, 1.6mm, 1.8mm, or 2mm. When the depth of the first accommodating groove 13A4 and/or the depth of the second accommodating groove 13B4 is less than the lower limit of the above range, the size of the accommodating groove 133 is too small, which may cause the explosion-proof valve 12 to protrude from the second surface 112, and the accommodating groove 133 cannot fully accommodate the explosion-proof valve 12, thereby increasing the thickness of the end cover assembly 10. When the depth of the first accommodating groove 13A4 and/or the depth of the second accommodating groove 13B4 is greater than the upper limit of the above range, the bottom wall of the accommodating groove 133 is too thin with weak strength, which may cause the accommodating groove 133 to be damaged during the installation of the end cover assembly.

By setting the groove depth of the first accommodating groove 13A4 and the groove depth of the second accommodating groove 13B4 within the above range, on the one hand, when the explosion-proof valve 12 protrudes from the second surface 112, a space for accommodating the explosion-proof valve 12 may be provided; on the other hand, it can ensure that the first insulating plate 13A and the second insulating plate 13B have sufficient thickness, thereby ensuring the structural strength of both, and avoiding bending, deformation, or even fracture during the assembly of the battery 100.

Furthermore, by setting the depth of the receiving slot 133 within the above range, the gap may be formed between the bottom wall of the accommodating groove 133 and the explosion-proof valve 12, avoiding the explosion-proof valve 12 from bursting in advance when the internal air pressure of the battery 100 does not reach the burst threshold.

In some embodiments, referring to FIG.5, the accommodating groove 133 and the explosion-proof valve 12 satisfy the relationship expression: 0.3 ≤ F1/G1 ≤ 1, where F1 is the orthographic projection area of the explosion-proof valve 12 onto the insulating plate assembly 13, and G1 is the orthographic projection area of the accommodating groove 133 onto the cover plate 11.

Specifically, the second surface 112 is further arranged with an explosion-proof groove, the explosion-proof hole 113 extends from the bottom wall of the explosion-proof groove to the first surface 111, therefore, the size of the explosion-proof groove should be larger than that of the explosion-proof hole 113. In some embodiments of the present disclosure, the shape of the explosion-proof groove is the same as the shape of the explosion-proof hole 113, and the sizes of both are proportional. The explosion-proof valve 12 is accommodated in the explosion-proof groove and the explosion-proof valve 12 is connected to the bottom wall and the outer peripheral wall of the explosion-proof groove. With this design, the explosion-proof valve 12 may seal the explosion-proof hole 113.

In some embodiments of the present application, the explosion-proof valve 12 is directly disposed opposite to the accommodating groove 133, and the orthographic projection of the explosion-proof valve 12 onto the insulating plate assembly 13 is located within the accommodating groove 133. Therefore, the orthographic projection area F1 of the explosion-proof valve 12 onto the insulating plate assembly 13 is smaller than the orthographic projection area of the accommodating groove 133 onto the cover plate 11. In some embodiments of the present application, F1/G1 may be, but not limited to, 0.3, 0.4, 0.5, 0.6, 0.7, 0.8, 0.9, or 1.

When F1/G1 is less than the lower limit of the above relational expression, it indicates that the explosion-proof valve 12 is too small, and correspondingly, the explosion-proof hole 113 is also small, when the explosion-proof valve 12 bursts, more gas cannot pass through, that is, the pressure relief effect is poor. When F1/G1 is greater than the upper limit of the above relational expression, it indicates that the explosion-proof valve 12 is too large, which will cause the explosion-proof valve 12 to be located outside the explosion-proof groove, thereby increasing the thickness of the end cover assembly 10.

The advantage of the combination of the explosion-proof valve 12 and the accommodating groove 133 with sizes within the range is that, the size of the explosion-proof valve 12 (explosion-proof hole 113) may be controlled within a suitable range, to ensure when the explosion-proof valve 12 bursts to release pressure, the combustion residues ejected out of the housing 30 of the battery 100 can be reduced; in addition, the explosion-proof valve 12 is smaller than the size of the accommodating groove 133, to ensure the explosion-proof valve 12 can be accommodated in the accommodating groove 133, thus reducing the space occupied by the explosion-proof valve 12 in the thickness direction (Z direction) on the end cover assembly 10, thereby improving the utilization rate of the internal space of the battery 100.

In some embodiments, referring to FIG.5, the explosion-proof valve 12 has two opposite straight sides and two opposite arc sides, the two ends of each straight side are respectively connected to the two arc sides, and the accommodating groove 133 is square. Further, the above arc sides are semicircular, therefore, an area of the explosion-proof valve: F1 = πR² + 2Ra, and an area of the accommodating groove: G1 = bc, where R is a radius of the arc sides, a is a length of the straight sides, b is a length of the accommodating groove 133, and c is the width of the accommodating groove 133.

Specifically, the shape of the explosion-proof valve 12 may be elliptical-like, so the explosion-proof valve 12 has two opposite straight sides and two opposite arc sides. Correspondingly, the area of the explosion-proof valve 12 can be calculated as the sum of the areas of two equal semicircles and a quadrilateral.

In other embodiments, the accommodating groove 133 may also have a rounded rectangle, elliptical, or elliptical-like structure, which is not limited in the present disclosure.

In some embodiments, referring to FIG.3, the width of the gap 135 between the first insulating plate 13A and the second insulating plate 13B is 0.5mm to 3mm. In some embodiments, the air hole 134 includes the first air hole 134A arranged on the first insulating plate 13A and/or the second air hole 134B arranged on the second insulating plate 13B (as described above). The first air hole 134A extends the first insulating plate 13A along the thickness direction (Z direction) of the cover plate 11. The second ventilation hole 134B extends the second insulating plate 13B along the thickness direction (Z direction) of the cover plate 11.

In some embodiments, referring to FIG.3, the number of the air holes 134 is multiple, and the air holes 134 include the first air holes 134A and second air holes 134B. The first air holes 134A are arranged on the first insulating plate 13A, and the second ventilation holes 134B are arranged on the second insulating plate 13B. The number of first air holes 134A is the same as the number of second air holes 134B. The first air holes 134A are arranged in an array, and the second air holes 134B are also arranged in an array.

Specifically, the shape and size of the first air hole 134A and the second air hole 134B may be the same or different. It will be understood that when the length of the first insulating plate 13A is the same as the length of the second insulating plate 13B, the shape and size of the first air hole 134A and the second air hole 134B may be the same. When the length of the first insulating plate 13A is different from the length of the second insulating plate 13B, the shape and size of the first air hole 134A and the second air hole 134B may be different.

In some embodiments, the number of the first air holes 134A may be three, and the number of the second air holes 134B may also be three. The three first air holes 134A are spaced apart along the width direction (Y direction), and the three second air holes 134B are spaced apart along the width direction (Y direction).

In some embodiments, the contour shape of both the first air hole 134A and the second air hole 134B can be either rounded rectangular or elliptical-like.

By arranging a plurality of air holes 134 on the insulating plate assembly 13, the gap 135 between the air holes 134 and the insulating plate assembly 13 may form a pressure relief channel. That is, when the internal air pressure of the battery 100 increases, the gas may converge near the explosion-proof valve 12 through the air holes 134 and the gap 135, thereby the explosion-proof valve 12 bursts; in addition, the insulating plate assembly 13 with a plurality of air holes 134 will form a filtering system, through the blocking of the insulating plate assembly 13, the situation that the combustion residues in the battery 100 are ejected out of the battery 100 may be reduced.

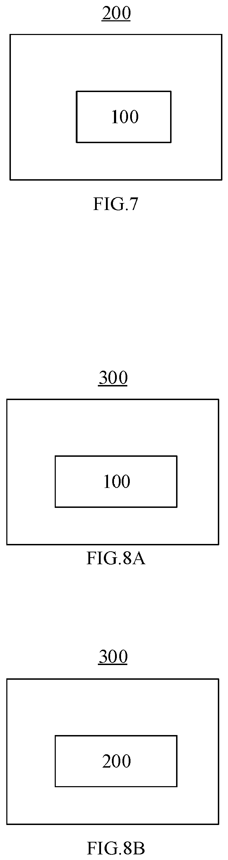

In some embodiments, the present disclosure also provides a battery pack. Referring to FIG.7, the battery pack 200 includes the battery 100 according to the above embodiments. In some embodiments, the battery pack 200 may be a power battery, etc., which is not limited by the present disclosure.

In some embodiments, the present disclosure also provides an electricity system. Referring to FIG.8A and 8B, the electricity system 300 includes the battery pack 200 or battery 100 according to the above embodiments. In some embodiments of the present disclosure, the electricity system 300 includes a load (not shown) connected to the above battery pack 200 or battery 100, and the battery pack 200 or battery 100 is used to supply power to the load. In some embodiments, the electricity system may be a vehicle or an energy storage power station.

In the description of the embodiments of the present disclosure, it will be noted that the terms "center", "upper", "lower", "left", "right", "vertical", "horizontal", "inner", "outer", etc., indicate the orientation or positional relationship based on the orientation or positional relationship shown in the drawings, which is only for the convenience of describing the present disclosure and simplifying the description, and does not indicate or imply that the device or element referred to must have a specific orientation, be constructed and operated in a specific orientation, and therefore will not be understood as a limitation to the present disclosure.

The above-disclosed are only exemplary embodiments of the present disclosure. and certainly cannot be used to limit the scope of rights of the present disclosure. Those of ordinary skill in the art can understand all or part of the processes for implementing the above embodiments, and any equivalent changes made according to the claims of the present disclosure still fall within the scope covered by the present disclosure.

## Claims

1. An end cover assembly (10), comprising:
A cover plate (11), the cover plate (11) comprising a first surface (111) and a second surface (112) facing away from each other in a thickness direction of the cover plate (11), and the cover plate (11) being arranged with an explosion-proof hole (113) extending through the first surface (111) and the second surface (112) of the cover plate (11);
an explosion proof valve (12), the explosion proof valve (12) being connected to the cover plate (11) and sealing the explosion-proof hole (113); and
an insulating plate assembly (13), the insulating plate assembly (13) comprising a third surface (131) and a fourth surface (132) facing away from each other in the thickness direction of the insulating plate assembly (13), the third surface (131) being close to the second surface (112), the third surface (131) being arranged with an air hole (134) extending through to the fourth surface (132) of the insulating plate assembly (13), and the air hole (134) being disposed opposite to the explosion-proof valve (12); the insulating plate assembly (13) comprising a first insulating plate (13A) and a second insulating plate (13b) oppositely arranged along a length direction of the cover plate (11), and an orthographic projection area of the explosion-proof valve (12) onto the first insulating plate (13A) taking up 40% to 100% of the orthographic projection area of the explosion-proof valve (12) along the thickness direction of the cover plate (11).

2. The end cover assembly (10) according to claim 1, wherein the orthographic projection area of the explosion-proof valve (12) onto the first insulating plate (13A) takes up 50% to 60% of the orthographic projection area of the explosion-proof valve (12) along the thickness direction of the cover plate (11).

3. The end cover assembly (10) according to claim 2, wherein in the length direction of the cover plate (11), the shortest distances from two ends of the cover plate (11) along the length direction to a center of the explosion-proof hole (113) are the same, and a length of the first insulating plate (13A) is different from a length of the second insulating plate (13b).

4. The end cover assembly (10) according to claim 1, wherein the insulating plate assembly (13) is arranged with a gap (135) between the first insulating plate (13A) and the second insulating plate (13b).

5. The end cover assembly (10) according to claim 4, wherein in the length direction of the cover plate (11), the length L1 of the first insulating plate (13A), the length L3 of the second insulating plate (13b), and a width L2 of the gap (135) satisfy the relationship expression: L1 ≥ L2+L3.

6. The end cover assembly (10) according to claim 4 or 5, wherein the orthographic projection area of the explosion-proof valve (12) onto the first insulating plate (13A) is greater than or equal to the difference between the orthographic projection area of the explosion-proof valve (12) along the thickness direction of the cover plate (11) and the orthographic projection area of the explosion-proof valve (12) onto the first insulating plate (13A).

7. The end cover assembly (10) according to claim 1, wherein the insulating plate assembly (13) is arranged with an accommodating groove (133) on the third surface (131), and the accommodating groove (133) is disposed opposite to the explosion-proof valve (12), the accommodating groove (133) and the insulating plate assembly (13) satisfy the relationship expression: 0.4 ≤ c/h ≤ 0.8, where in a width direction of the cover plate (11), c is a width of the accommodating groove (133), h is a width of the insulating plate assembly (13), and the units of c and h are the same.

8. The end cover assembly (10) according to claim 7, wherein one side facing the cover plate (11) of the first insulating plate (13A) is arranged with a concave first accommodating groove (13A4), one side facing the cover plate (11) of the second insulating plate (13b) is arranged with a concave second accommodating groove (13B4), and the first accommodating groove (13A4) and the second accommodating groove (13B4) form the accommodating groove (133).

9. The end cover assembly (10) according to claim 8, wherein the accommodating groove (133) satisfies at least one of the following:
a groove depth (H1) of the first accommodating groove (13A4) being in a range of 0.5mm to 2mm; or
a groove depth (H2) of the second accommodating groove (13B4) being in a range of 0.5mm to 2mm.

10. The end cover assembly (10) according to claim 8, wherein the first accommodating groove (13A4) extends along the length direction of the cover plate (11) to one side of the first insulating plate (13A) facing the second insulating plate (13b) to form a first notch (13A5) , and the second accommodating groove (13B4) extends along the length direction of the cover plate (11) to one side of the second insulating plate (13A) facing the first insulating board (13A) to form a second notch (13B5) .

11. The end cover assembly (10) according to claim 1, wherein the air hole (134) comprises at least one of the following:
a first air hole (134A) arranged on the first insulating plate (13A), and the first air hole (134A) extending through the first insulating plate (13A) along the thickness direction of the cover plate (11); or
a second air hole (134B) arranged on the second insulating plate (13b), and the second ventilation hole (134B) extending through the second insulating plate (13b) along the thickness direction of the cover plate (11).

12. The end cover assembly (10) according to claim 11, wherein the insulating plate assembly (13) is arranged with a plurality of air holes (134), the air holes comprises the first air holes (134A) and the second air holes (134B), the number of the first air holes (134A) arranged on the first insulating plate (13A) is the same as the number of the second air holes (134B) arranged on the second insulating plate (13b), and the first air holes (134A) are arranged in an array and the second air holes (134B) are arranged in an array.

13. A battery (100), comprising a cell assembly (20), a housing (30), and the end cover assembly (10) according to any one of claims 1 to 2, the cell assembly (20) being accommodated within the housing (30), the end cover assembly (10) being connected to the housing (30), and the end cover assembly (10) being electrically connected to the cell assembly (20).

14. A battery pack (200) , comprising the battery (100) according to claim 13.

15. An electrical system (300), comprising the battery pack (200) according to claim 14 or the battery (100) as according to claim 13.
